# EUROPÄISCHE PATENTSCHRIFT

(11) **EP 3 812 858 B1**
(45) Veröffentlichungstag und Bekanntmachung des Hinweises auf die Patenterteilung: **01.05.2024**
(21) Anmeldenummer: 20201290.2
(22) Anmeldetag: 12.10.2020
(51) Int. Cl.: G05B 19/05

(54) **FELDGERÄT MIT UMSCHALTBAREM ANSCHLUSSELEMENT**
FIELD DEVICE WITH SWITCHABLE CONNECTION ELEMENT
APPAREIL DE TERRAIN POURVU D'ÉLÉMENT DE RACCORDEMENT COMMUTABLE

(30) Priorität: 21.10.2019 DE 102019128369
(43) Veröffentlichungstag der Anmeldung: 28.04.2021
(73) Patentinhaber: Turck Holding GmbH, 58553 Halver (DE)
(72) Erfinder: Gräfenstein, Vitali, 33034 Brakel (DE)
(74) Vertreter: Grundmann, Dirk

(56) Entgegenhaltungen:
- EP-A1- 0 620 510
- EP-A1- 3 531 710
- WO-A1-2014/133850
- DE-A1-102012 021 847
- DE-U1- 20 205 551

## Beschreibung

### Gebiet der Technik

Die Erfindung betrifft ein Feldgerät. Das erfindungsgemäße Feldgerät ist außerhalb eines Schaltschrankes verwendbar und kann über einen Bus, beispielsweise Feldbus mit einer Steuerung verbunden werden. Bei dem erfindungsgemäßen Feldgerät kann es sich um ein endständiges Feldgerät handeln, beispielsweise einen Aktuator oder einen Sensor, wobei das endständige Feldgerät über eine Kommunikationsleitung mit einer Feldschnittstelle eines Feldbusgerätes verbunden werden kann.

Die Erfindung betrifft aber auch ein Feldgerät, welches die Funktion eines Feldbusgerätes aufweist, mit dem eine Kommunikationsleitung eines endständigen Feldgerätes an einer Feldschnittstelle des Feldbusgerätes angeschlossen werden kann, sodass ein endständiges Feldgerät über ein Bussystem mit einer Steuerung, die in einem Schaltschrank angeordnet sein kann, kommunizieren kann.

### Stand der Technik

Feldgeräte sind im Stand der Technik bekannt. Sie können eine insbesondere programmierbare Schnittstelle zwischen einem zweiten Feldgerät und dem Feldbus bilden, wobei das zweite Feldgerät ein Sensor oder ein Aktuator sein kann. Ein Feldbusgerät besitzt ein oder mehrere Bus-Anschlusselemente, an denen ein Feldbus angeschlossen werden kann. Beispielsweise kann das Bus-Anschlusselement zwei elektrische Anschlüsse aufweisen, so dass ein Feldbus durch das Feldgerät hindurchgeschleift werden kann. Das Gehäuse weist darüber hinaus zumindest ein, bevorzugt aber eine Vielzahl von Anschlusselementen auf. Es können zwei, vier, sechs, acht oder mehr Anschlusselemente vorgesehen sein. Jedes Anschlusselement kann eine Schnittstelle ausbilden, an die ein Sensor oder Aktuator angeschlossen werden kann. Diese Schnittstelle wird im folgenden mit Feldschnittstelle bezeichnet. Ein bekanntes, wasserdichtes Gehäuse besitzt zudem eine Computerschnittstelle, an die ein Computer oder dergleichen angeschlossen werden kann. Es handelt sich um einen USB-Port, der hinter einer Verschlussklappe angeordnet ist, die den USB-Port wasserdicht verschließt und die zum Anschließen eines USB-Gerätes geöffnet werden kann.

Die DE 10 2012 021 847 A1 beschreibt eine universelle Schnittstelle, die derart konfigurierbar ist, dass sie zur analogen und digitalen Informationsübertragung an Messgeräte verschiedener Hersteller anpassbar ist.

Die EP 0620510 und DE 20205551 U1 beschreiben elektrische Geräte mit konfigurierbaren Schnittstellen.

### Zusammenfassung der Erfindung

Der Erfindung liegt die Aufgabe zugrunde, das bekannte Feldgerät gebrauchsvorteilhaft weiterzubilden.

Gelöst wird die Aufgabe durch die in den Ansprüchen angegebene Erfindung. Die Unteransprüche stellen vorteilhafte Weiterbildungen dar.

Zunächst und im Wesentlichen wird vorgeschlagen, dass zumindest eines der ein oder mehreren Anschlusselemente insbesondere von einer Steuerung oder manuell umschaltbar ist. Das Umschalten kann auch ferngesteuert, beispielsweise über eine Web-Schnittstelle erfolgen, wobei eine Steuerung des Feldgerätes eine diesbezügliche Programmierung aufweist. Je nach Schaltstellung kann es als Schnittstelle für das zweite Feldgerät (Feldschnittstelle) oder alsKommunikationsschnittstelle verwendet werden. Die Kommunikationsschnittstelle ist für den Datenaustausch beispielsweise mit einem Computer ausgelegt und insbesondere eine Standardschnittstelle, beispielsweise eine USB-Schnittstelle (Universal Serial Bus). Ein erfindungsgemäßes Anschlusselement, welches derart in seiner Funktionalität umschaltbar ist, besitzt eine Vielzahl, insbesondere vier oder fünf elektrische Kontakte. Ein Steckverbinder, der mit einem Kabel mit einem zweiten Feldgerät verbunden ist, kann an das Anschlusselement angeschlossen werden. Die Steckverbindung besitzt Gegenkontakte, die elektrisch leitendend mit den Kontakten des Anschlusselementes verbunden werden können. Dies erfolgt bevorzugt in einer wasserdichten Verbindung. Anstelle der Gegenkontakte eines zweiten Feldgerätes können aber auch die Gegenkontakte einer Steckverbindung mit den Kontakten des Anschlusselementes elektrisch verbunden werden, die zu einer Kommunikationsschnittstelle, beispielsweise Computerschnittstelle gehören, beispielsweise eine USB-Schnittstelle, sodass die Steuerung des Feldbussteuergerätes in eine Datenaustauschverbindung mit einem Computer gebracht werden kann. In einer bevorzugten Ausgestaltung der Erfindung ist eine Umschalteinrichtung vorgesehen. Die Umschalteinrichtung kann von der programmierbaren Steuerung betätigt werden. Dies kann nach einem in der Steuerung implementierten Programm erfolgen. Die Umschalteinrichtung kann somit von der Software gesteuert werden. Es ist aber auch möglich, die Umschalteinrichtung von einer Hardware zu steuern, beispielsweise durch Umlegen eines mechanischen Schalters. Alternativ dazu ist es möglich, kapazitive Sensorflächen am Gehäuse oder eine Web-schnittstelle zu verwenden. Innerhalb des Gehäuses ist eine auf ein oder mehreren Leiterplatten angeordnete elektronische Schaltung angeordnet. Diese Schaltung weist Treiberelemente auf, mit denen die Feldgerätschnittstelle oder mit denen die Computerschnittstelle elektrisch leitend verbindbar sind. Durch Umschalten der Umschalteinrichtung können die Kontakte des Anschlusselementes wahlweise mit den Treiberelementen der Feldgerätschnittstelle oder den Treiberelementen der Kommunikationsschnittstelle verbunden werden. In einer bevorzugten Ausgestaltung der Erfindung ist vorgesehen, dass die Treiberelemente jeweils eine Spannungsversorgung ausbilden. Je nach Protokoll der Feldgerätschnittstelle oder der Kommunikationsschnittstelle stellt die Spannungsversorgung eine dem Protokoll entsprechende Spannung zur Verfügung. Zumindest zwei Kontakte sind für die Spannungsversorgung vorgesehen. Die Treiberelemente weisen darüber hinaus eine Funktionseinheit zum Empfang und zum Senden von Daten auf. Eine derartige I/O-Funktionseinheit kann zwei oder drei elektrische Leiter aufweisen, über die insbesondere seriell, aber auch parallel Daten übertragen werden können. In einer Weiterbildung der Erfindung bildet die elektrische Schaltung zwei Abschnitte aus, die galvanisch voneinander getrennt sind. Ein erster dieser Abschnitte weist die Steuerung auf, die beispielsweise von einem Mikro-Controller ausgebildet sein kann. Ein zweiter dieser Abschnitte bildet das zumindest eine Anschlusselement aus, welches umschaltbar ist. Es ist insbesondere vorgesehen, dass dem zweiten dieser Abschnitte eine Vielzahl von Schaltern zugeordnet ist, die zusammen die Umschalteinrichtung ausbildet. Die Schalter können beispielsweise über Optokoppler oder dergleichen mit den Treiberelementen der Kommunikationsschnittstelle verbunden sein. Es kann vorgesehen sein, dass die Treiberelemente der Feldgerätschnittstelle dem zweiten Abschnitt zugeordnet sind und dass Datenleitungen der Feldgerätschnittstelle über galvanische Trennelemente, beispielsweise Optokoppler mit der Steuerung, beispielsweise die Mikro-Controller verbunden sind.

In einer bevorzugten Ausgestaltung der Erfindung können die Anschlusselemente zumindest drei Kontakte, bevorzugt mindestens vier Kontakte und besonders bevorzugt fünf oder zumindest fünf Kontakte aufweisen. Die Umschalteinrichtung kann für jeden der Kontakte einen Schalter aufweisen, der wahlweise den Kontakt mit einem Treiberelement der Feldgerätschnittstelle oder einem Treiberelement der Kommunikationsschnittstelle verbindet. Die Umschalteinrichtung weist zumindest einen der folgenden Schalter oder bevorzugt sämtliche der folgenden Schalter auf: einen ersten Schalter, der einen ersten Kontakt wahlweise mit der Funktionseinheit der Feldgerätschnittstelle oder der I/O-Funktionseinheit der Kommunikationsschnittstelle verbindet und/oder einen zweiten Schalter, der einen zweiten Kontakt wahlweise mit einer Spannungsversorgung der Feldgerätschnittstelle oder einer Spannungsversorgung der Kommunikationsschnittstelle verbindet und/oder einen dritten Schalter, der eine dritten Kontakt wahlweise mit Masse oder einer 1/O-Funktionseinheit der Kommunikationsschnittstelle verbindet, und/oder einen vierten Schalter, der einen vierten Kontakt wahlweise mit einem I/O-Feldfunktionselement der Feldgerätschnittstelle oder einem 1/O-Funktionselement der Kommunikationsschnittstelle verbindet, und/oder einem fünften Schalter, der einen fünften Kontakt wahlweise mit einer Spannungsversorgung der Feldgerätschnittstelle oder einer Spannungsversorgung der Kommunikationsschnittstelle verbindet. Es ist auch möglich, dass lediglich die Kontakte, die mit einem I/O-Funktionselement verbunden sind, einen umschaltbaren Schalter aufweisen. In einer Weiterbildung der Erfindung wird vorgeschlagen, dass die Anschlusselemente wasserfest, beispielsweise zumindest IP54 oder zumindest IP67-wasserdicht ausgeführt sind. Es kann hierzu insbesondere vorgesehen sein, dass die Anschlusselemente Stecker sind, wobei unter Stecker sowohl männliche als auch weibliche verstanden werden. Die Anschlusselemente können auch männliche oder weibliche Rundstecker und insbesondere M8- oder M12 Rundstecker sein. Derartige Rundstecker besitzen ein Außengewinde zum Aufschrauben einer Steckverbindung. Anstelle der Steckverbindung kann auf den M8- oder M12-Rundstecker aber auch eine Kappe aufgeschraubt werden, um ein freies, nicht mit einer Steckverbindung verbundenes Anschlusselement wasserdicht zu verschließen. Die Kontakte des Anschlusselementes sind bevorzugt symmetrisch bezogen auf ein Zentrum angeordnet. Im Zentrum kann ein Kontakt angeordnet sein. Ein derartiger Zentralkontakt ist wahlweise mit Masse verbindbar. An dem Gehäuse können weitere Anschlusselemente vorgesehen sein, beispielsweise Bus-Anschlusselemente, mit denen das Gehäuse mit einem Feldbus elektrisch leitend verbunden werden kann. Es können zwei Bus-Anschlusselemente vorgesehen sein, um eine Busleitung durch das Gehäuse hindurch zu schleifen. Über die Feldgeräteschnittstelle erfolgt eine Kommunikation zwischen einem Feldbusgerät, das über einen Feldbus mit einer Steuerung verbunden ist, mit dem endständigen Feldgerät, also beispielsweise einem Sensor oder einem Aktuator. Über die Feldgeräteschnittstelle kann das Feldbusgerät analoge oder digitale Signale von einem Sensor erhalten oder digitale oder analoge Daten an einen Aktuator versenden. Das analoge Signal kann ein Spannungssignal oder ein Stromsignal sein. Das digitale Signal kann eine BitFolge sein. Über die Feldgeräteschnittstelle kann ein proprietäres Protokoll zwischen Feldbusgerät und Feldgerät übertragen werden. Die Erfindung betrifft sowohl eine Weiterbildung des endständigen Feldgerätes als auch eine Weiterbildung des Feldbusgerätes, welches eine Protokolltransformation durchführen kann.

### Kurze Beschreibung der Zeichnungen

Ausführungsbeispiele der Erfindung werden nachfolgend anhand beigefügter Zeichnungen erläutert. Es zeigen:
- Fig. 1: in einer Draufsicht ein Feldgerät des Ausführungsbeispiels, Seite 7, welches ein Feldbusgerät sein kann,
- Fig. 2: eine Seitenansicht auf das Feldgerät,
- Fig. 3: ein Funktionsschaltbild der Schaltung des Feldgerätes.

### Beschreibung der Ausführungsformen

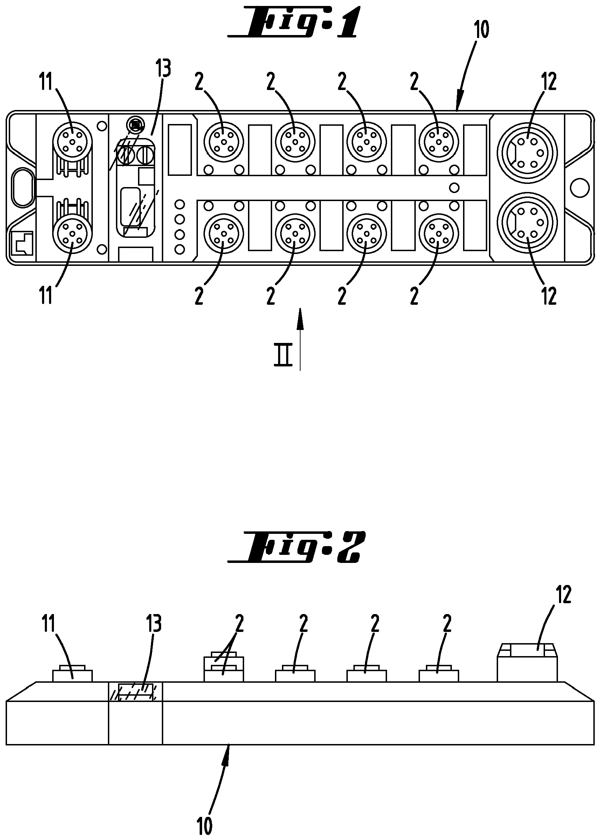

Das in den Figuren 1 und 2 dargestellte Gerät ist ein Feldgerät und wird nachfolgend mit Feldbusgerät bezeichnet. Es besitzt ein im Wesentlichen wasserdichtes Kunststoffgehäuse 10 (IP67), welches im Wesentlichen eine Quaderform aufweist. Auf einer Breitseitenfläche sind acht Anschlusselemente 2 angeordnet. An jedes der Anschlusselemente 2 kann ein Feldbusgerät, beispielsweise ein Sensor oder ein Aktuator angeschlossen werden. Die Bezugsziffern 12 bezeichnen weitere Anschlusselemente, beispielsweise zum Anschluss einer externen Stromversorgung. Die Bezugsziffer 11 bezeichnen Busanschlusselemente, mit denen das Feldbusgerät mit einem Feldbus verbunden werden kann. Mit der Bezugsziffer 13 ist ein verschließbares Fenster angeordnet, rückwärtig dessen ein weiteres Anschlusselement angeordnet sein kann oder rückwärtig dessen ein Schalter angeordnet werden kann. Mit dem Fenster kann eine Aussparung, ein Schacht oder eine Vertiefung wasserdicht verschlossen werden. In der Aussparung, dem Schacht oder der Vertiefung können Schaltelemente, Steckelemente oder dergleichen angeordnet sein, beispielsweise um Parameter des Feldgerätes zu ändern.

Die Anschlusselemente 2 sind mit einer Steuerung 6, bei der sich um eine CPU oder einen Mikrocontroller handeln kann, verbunden. Beim Ausführungsbeispiel bilden sämtliche Anschlusselemente 2 Feldgeräteschnittstellen. An jedes der Anschlusselemente 2 kann ein Feldgerät angeschlossen werden, beispielsweise ein Aktuator oder ein Sensor. Zumindest eines der Anschlusselemente 2 kann eine Doppelfunktion besitzen. An dieses Anschlusselement 2 kann nicht nur ein Feldgerät angeschlossen werden. An dieses Anschlusselement 2 kann auch ein Datenträger oder ein Element einer EDV-Einrichtung, beispielsweise ein Personal-Computer oder Service-Rechner, angeschlossen werden. Bevorzugt kann dieses Anschlusselement 2 umgeschaltet werden zwischen einer ersten Funktion, in der es als Schnittstelle für das Feldgerät wirkt und einer zweiten Funktion, in der es als Kommunikationsschnittstelle, beispielsweise als Computerschnittstelle zum Datenaustausch wirkt. Bei der Computerschnittstelle handelt es sich bevorzugt um eine standardisierte Schnittstelle zur Datenkommunikation mit einem Computer, beispielsweise einem USB-Port.

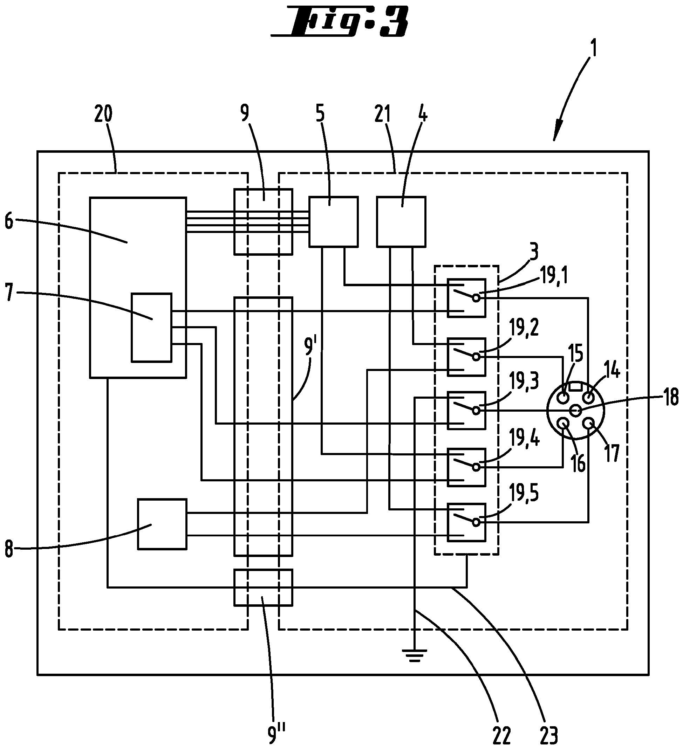

Die Figur 3 zeigt die Beschaltung eines derartigen Anschlusselementes 2. Das Anschlusselement 2 wird von einem Rundstecker ausgebildet. Es handelt sich bevorzugt um einen M8- oder um einen M12-Rundsteckverbinder. Der Rundsteckverbinder besitzt ein Außengewinde, auf den eine Überwurfmutter eines Steckverbinders aufgeschraubt werden kann. Der Steckverbinder ist mit dem Anschlusselement wasserdicht verbunden. Ein nicht verwendetes Anschlusselement 2 kann mit einer Schraubkappe wasserdicht verschlossen werden. Das Anschlusselement 2 besitzt insgesamt fünf Kontakte 14, 15, 16, 17, 18. Jeder der Kontakte 14, 15, 16, 17, 18 ist mit einem ihm zugeordneten Schalter 19.1, 19.2, 19.3, 19.4 und 19.5 verbunden, wobei die Schalter insgesamt von einer Umschalteinrichtung 3 ausgebildet sind. Die Umschalteinrichtung 3 kann über eine Signalleitung 23 von der Steuerung 6 umgeschaltet werden.

Ein erster Umschalter 19.1 kann den Kontakt 14 wahlweise mit einer eine 1/O-Funktionseinheit 5 der Feldgeräteschnittstelle oder einer 1/O-Funktionseinheit 7 der Computerschnittstelle verbinden. Ein zweiter Umschalter 19.2 kann den Kontakt 15 wahlweise mit einer Spannungsversorgung 4 der Feldgeräteschnittstelle oder einer Spannungsversorgung 8 der Computerschnittstelle verbinden. Ein dritter Umschalter 19.3 kann den Kontakt 18 wahlweise mit Masse 22 oder der I/O-Funktionseinheit 5 der Computerschnittstelle verbinden. Ein vierter Schalter 19.4 kann den Kontakt 16 wahlweise mit dem I/O-Funktionselement 5 der Feldgeräteschnittstelle oder der I/O-Funktionseinheit der Computerschnittstelle verbinden. Ein fünfter Schalter 19.5 kann den Kontakt 17 wahlweise mit der Spannungsversorgung 4 der Feldgeräteschnittstelle oder der Spannungsversorgung 8 der Computerschnittstelle verbinden.

Die Spannungsversorgung 4 der Feldgeräteschnittstelle kann eine Spannung von beispielsweise 6, 12, 18 oder 24 V liefern. Die Spannungsversorgung 8 der Computerschnittstelle liefert bevorzugt eine Spannung von 5 V.

Die Umschalter 19.1 bis 19.5 werden bevorzugt von Transistoren ausgebildet, die von der Steuerung 6 getrieben werden.

Die Bezugsziffern 9 kennzeichnet eine galvanische Trennung zwischen zwei Abschnitten 20, 21 der elektronischen Schaltung. Der erste Abschnitt 20 der elektronischen Schaltung weist die Steuerung 6, die I/O-Funktionseinheit 7 der Computerschnittstelle und die Spannungsversorgung 8 der Computerschnittstelle auf. Die Anschlussleitungen der Spannungsversorgung 8 und der I/O-Funktionseinheit 7 sind beispielsweise über Optokoppler mit den Schaltern 19.1, 19.2, 19.3, 19.4 bzw. 19.2 und 19.5 verbunden. Die Schalter befinden sich auf dem zweiten Abschnitt 21 elektronischen Schaltung. Die beiden Abschnitte 20, 21 gehören somit zu verschiedenen Spannungsdomänen, die voneinander galvanisch getrennt sind. Die 1/O-Funktionseinheit 5 der Feldschnittstelle und die Spannungsversorgung 4 der Feldgeräteschnittstelle sind dem zweiten Abschnitt 21 zugeordnet.

Das Anschlusselement 2 besitzt einen Sockel, der je 5 Kontakte 14 bis 18 trägt. Die Kontakte 14 bis 17 sind auf den Eckpunkten eines Quadrates, und der Kontakt 18 ist im Zentrum des Quadrates angeordnet. In nicht dargestellten Ausführungsbeispielen können die Anschlusselemente 2 eine andere Anzahl von Kontakten und eine andere Anordnung von Kontakten aufweisen, so ist insbesondere vorgesehen, dass ein Anschlusselement vier, sechs, sieben, acht oder mindestens vier, mindestens sechs, mindestens sieben oder mindestens acht Kontakte aufweist.

In nicht dargestellten Ausführungsbeispielen können die Kontakte der Anschlusselemente 2 beispielsweise vertauscht sein gegenüber der Anordnung in den Zeichnungen. Es kann ferner vorgesehen sein, dass der im Gehäuse angeordnete Mikrocontroller 6 eine Web-Schnittstelle ausbildet, über die im Wege einer Fernbedienung die Umschalteinrichtung 3 betätigt werden kann. Über die Web-Schnittstelle kann im Wege einer Administration oder Konfiguration des Feldgerätes eines der Anschlusselemente 2 als USB-Schnittstelle oder als Schnittstelle für einen Sensor oder Aktuator verwendet werden.

In einem nicht dargestellten Ausführungsbeispiel kann ein mechanischer Schalter oder ein berührungssensitiver Schalter am Gehäuse vorgesehen sein, mit dem die Umschalteinrichtung 3 betätigbar ist. Dies kann auch ein Magnetschalter oder ein anderer Sensor sein.

In einem nicht dargestellten Ausführungsbeispiel ist die in der Figur 3 dargestellte Schaltung in einem endständigen Feldgerät, also beispielsweise in einem Sensor oder Aktuator angeordnet. Das Feldgerät kann ein oder mehrere Anschlusselemente 2 aufweisen, die gemäß Figur 3 mit den Kontakten 14 bis 18 versehen sind, wobei zumindest eines der Anschlusselemente 2 in der zuvor beschriebenen Weise umschaltbar ist.

### Liste der Bezugszeichen

| | | | |
|---|---|---|---|
| 1 | elektrische Schaltung | 17 | Kontakt |
| 2 | Anschlusselement | 18 | Kontakt |
| 3 | Umschalteinrichtung | 19 | Schalter |
| 4 | Spannungsversorgung der Feldschnittstelle | 19.1 | Schalter |
| | | 19.2 | Schalter |
| 5 | I/O-Funktionseinheit der Feldschnittstelle | 19.3 | Schalter |
| | | 19.4 | Schalter |
| 6 | Steuerung, CPU | 19.5 | Schalter |
| 7 | I/O-Funktionseinheit der Computerschnittstelle | 20 | Schaltungsabschnitt |
| | | 21 | Schaltungsabschnitt |
| 8 | Spannungsversorgung Computerschnittstelle | 22 | Masse |
| | | 23 | Signalleitung |
| 9 | Galvanische Trennung | | |
| 10 | Gehäuse | | |
| 11 | Busanschlusselement | | |
| 12 | Anschlusselement | | |
| 13 | Fenster | | |
| 14 | Kontakt | | |
| 15 | Kontakt | | |
| 16 | Kontakt | | |

## Patentansprüche

1. Feldgerät mit einem Gehäuse (10) und einer darin angeordneten elektrischen Schaltung (1), die mittels einer Umschalteinrichtung (3) wahlweise entweder als Feldgeräteschnittstelle zum Anschluss an ein zweites Feldgerät oder als standardisierte Kommunikationsschnittstelle, die einen Datenaustausch mit einem Computer ermöglicht, verwendet werden kann, wobei am Gehäuse ein oder mehrere jeweils elektrisch leitende Kontakte (14, 15, 16, 17, 18) aufweisende Anschlusselemente (2) angeordnet sind, wobei die Kontakte (14, 15, 16, 17, 18) an Gegenkontakte eines Steckverbinders elektrisch kontaktierbar sind, **dadurch gekennzeichnet, dass** die Kontakte (14, 15, 16, 17, 18) zumindest eines der ein oder mehreren Anschlusselemente (2) mittels der Umschalteinrichtung (3) wahlweise mit Treiberelementen (7, 8) der Kommunikationsschnittstelle oder mit Treiberelementen (4, 5) der Feldgeräteschnittstelle verbindbar sind.

2. Feldgerät nach Anspruch 1, **dadurch gekennzeichnet, dass** das Feldgerät ein Feldbusgerät ist, das ein an einen Feldbus anschließbares Bus-Anschlusselement (11) aufweist.

3. Feldgerät nach einem der vorhergehenden Ansprüche, **dadurch gekennzeichnet, dass** das Feldgerät ein endständiges Feldgerät, beispielsweise ein Sensor oder Aktuator ist, welches mit dem ein oder mehreren Anschlusselement (2) mit einem Feldbusgerät verbindbar ist.

4. Feldgerät nach Anspruch 2 oder 3, **dadurch gekennzeichnet, dass** das als Feldbusgerät oder als endständiges Feldgerät ausgebildete Feldgerät eine programmierbare Steuerung (6) aufweist, die die Umschalteinrichtung (3) betätigt.

5. Feldgerät nach nach einem der vorhergehenden Ansprüche, **dadurch gekennzeichnet, dass** die Treiberelemente jeweils eine Spannungsversorgung (4, 8) und/oder eine IjO-Funktionseinheit (5, 7) zum Empfang und zum Senden von Daten aufweisen.

6. Feldgerät nach einem der Ansprüche 1 bis 5, **dadurch gekennzeichnet, dass** die Treiberelemente (7, 8) der Kommunikationsschnittstelle mittels Trennelementen (9) galvanisch von Schaltern (19.1, 19.2, 19.3, 19.4., 19.5) getrennt sind.

7. Feldgerät nach einem der vorhergehenden Ansprüche, **dadurch gekennzeichnet, dass** das Anschlusselement (2) vier, fünf oder sechs Kontakte (14, 15,16,17,18) aufweist.

8. Feldgerät nach einem der vorhergehenden Ansprüche, **dadurch gekennzeichnet, dass** die Umschalteinrichtung (3) zumindest einen der folgenden Schalter oder sämtliche der folgenden Schalter aufweist:
- einen Schalter (19.1), der den Kontakt (14) wahlweise mit der I/O-Funktionseinheit (5) der Feldgeräteschnittstelle oder der I/O-Funktionseinheit (7) der Kommunikationsschnittstelle,
- einen Schalter (19.2), der einen Kontakt (15) wahlweise mit einer Spannungsversorgung (4) der Feldgeräteschnittstelle oder der Spannungsversorgung (8) der Kommunikationsschnittstelle,
- einen Schalter (19.3), der den Kontakt (18) wahlweise mit Masse (22) oder der I/O-Funktionseinheit (5) der Kommunikationsschnittstelle,
- einen Schalter (19.4), der den Kontakt (16) wahlweise mit dem IjO-Funktionselement (5) der Feldgeräteschnittstelle oder dem I/O-Funktionselement (7) der Kommunikationsschnittstelle, oder
- einen Schalter (19.5), der den Kontakt (17) wahlweise mit einer Spannungsversorgung (4) der Feldgeräteschnittstelle oder der Spannungsversorgung (8) der Kommunikationsschnittstelle verbindet.

9. Feldgerät nach einem der vorhergehenden Ansprüche, **dadurch gekennzeichnet, dass** die Kommunikationsschnittstelle eine USB-Schnittstelle ist.

10. Feldgerät nach einem der vorhergehenden Ansprüche, **dadurch gekennzeichnet, dass** das Gehäuse und die Anschlusselemente (2) wasserfest, insbesondere mindestens IP 54 oder mindestens IP 67-wasserdicht ausgeführt sind.

11. Feldgerät nach einem der vorhergehenden Ansprüche, **dadurch gekennzeichnet, dass** die Anschlusselemente (2) Rundstecker, insbesondere M8- oder M12-Rundstecker sind mit einem Außengewinde zum Aufschrauben der Steckverbindung und mit einem Sockel, in dem die Kontakte (14,15, 16,17,18,19) in einer symmetrischen Anordnung um ein Zentrum angeordnet sind, wobei insbesondere vorgesehen ist, dass der Kontakt (18), der wahlweise mit Masse (22) verbindbar ist, im Zentrum sitzt.

12. Feldgerät nach einem der vorhergehenden Ansprüche, **dadurch gekennzeichnet, dass** freie Anschlusselemente (2) mit Verschlusskappen wasserdicht verschlossen sind.

## Claims

1. Field device having a housing (10) and an electrical circuit (1) which is arranged therein and can be used by means of a changeover device (3) either as a field device interface for connection to a second field device or as a standardized communication interface which enables data exchange with a computer, wherein one or more connecting elements (2) being arranged on the housing, which each have electrically conductive contacts (14, 15, 16, 17, 18), wherein it is possible for the contacts (14, 15, 16, 17, 18) to make electrical contact with mating contacts of a plug connector, **characterized in that** the contacts (14, 15, 16, 17, 18) of at least one of the one or more connection elements (2) can be connected by means of the changeover device (3) optionally to driver element (7, 8) of the communication interface or to driver elements (4, 5) of the field device interface.

2. Field device according to claim 1, **characterized in that** the field device is a field bus device which has a bus connection element (11) which can be connected to a field bus.

3. Field device according to one of the preceding claims, **characterized in that** the field device is a terminal field device, for example a sensor or actuator, which can be connected to a field bus device by means of one or more connection elements (2).

4. Field device according to claim 2 or 3, **characterized in that** the field device designed as a field bus device or as a terminal field device has a programmable controller (6) which actuates the changeover device (3).

5. Field device according to one of the preceding claims, **characterized in that** the driver elements each have a power supply (4, 8) and/or an I/O functional unit (5, 7) for receiving and transmitting data.

6. Field device according to one of claims 1 to 5, **characterized in that** the driver elements (7, 8) of the communication interface are electrically isolated from switches (19.1, 19.2, 19.3, 19.4, 19.5) by means of isolating elements (9).

7. Field device according to one of the preceding claims, **characterized in that** the connection element (2) has four, five or six contacts (14, 15, 16, 17, 18).

8. Field device according to one of the preceding claims, **characterized in that** the changeover device (3) has at least one of the following switches or all of the following switches:
- a switch (19.1) which optionally connects the contact (14) to the I/O function unit (5) of the field device interface or the I/O function unit (7) of the communication interface,
- a switch (19.2) that optionally connects a contact (15) to a power supply (4) of the field device interface or the power supply (8) of the communication interface,
- a switch (19.3) that optionally connects the contact (18) to ground (22) or the I/O function unit (5) of the communication interface,
- a switch (19.4) which optionally connects the contact (16) to the I/O functional element (5) of the field device interface or the I/O functional element (7) of the communication interface, or
- a switch (19.5) which optionally connects the contact (17) to a power supply (4) of the field device interface or the power supply (8) of the communication interface.

9. Field device according to one of the preceding claims, **characterized in that** the communication interface is a USB interface.

10. Field device according to one of the preceding claims, **characterized in that** the housing and the connection elements (2) are designed to be waterproof, in particular at least IP 54 or at least IP 67 waterproof.

11. Field device according to one of the preceding claims, **characterized in that** the connecting elements (2) are round plugs, in particular M8 or M12 round plugs with an external thread for screwing on the plug connection and with a base in which the contacts (14, 15, 16, 17, 18, 19) are arranged in a symmetrical arrangement around a center, it being provided in particular that the contact (18), which can optionally be connected to earth (22), is located in the center.

12. Field device according to one of the preceding claims, **characterized in that** free connection elements (2) are sealed watertight with sealing caps.

## Revendications

1. Appareil de terrain comprenant un boîtier (10) dans lequel est disposé un circuit électrique (1), qui peut être utilisé au moyen d'un appareil de commutation (3) soit comme interface d'appareil de terrain pour la connexion à un deuxième appareil de terrain, soit comme interface de communication standardisée, qui permet un échange de données avec un ordinateur, dans lequel sur le boîtier sont disposés un ou plusieurs éléments de connexion (2) comportant respectivement des contacts électriquement conducteurs (14, 15, 16, 17, 18), dans lequel les contacts (14, 15, 16, 17, 18) pouvant être contactés électriquement avec des contacts homologues d'un connecteur enfichable, caractérisé en que les contacts (14, 15, 16, 17, 18) d'au moins un parmi un ou plusieurs éléments de connexion (2) peuvent être connectés au moyen du dispositif de commutation (3) soit à des éléments pilotes (7, 8) de l'interface de communication, soit à des éléments pilotes (4, 5) de l'interface d'appareil de terrain.

2. Appareil de terrain selon la revendication 1, **caractérisé en ce que** l'appareil de terrain est un appareil de bus de terrain qui possède un élément de connexion de bus (11) qui peut être connecté à un bus de terrain.

3. Appareil de terrain selon une des revendications précédentes, **caractérisé en ce que** l'appareil de terrain est un appareil de terrain terminal, par exemple un capteur ou un actionneur, qui peut être connecté à un appareil de bus de terrain avec le ou les éléments de connexion (2).

4. Appareil de terrain selon la revendication 2 ou 3, **caractérisé en ce que** l'appareil de terrain conçu comme appareil de bus de terrain ou comme appareil de terrain terminal possède un automate programmable (6), qui actionne l'appareil de commutation (3).

5. Appareil de terrain selon une des revendications précédentes, **caractérisé en ce que** les éléments pilotes disposent chacun d'une alimentation (4, 8) et/ou une unité fonctionnelle E/S (5, 7) pour recevoir et envoyer des données.

6. Appareil de terrain selon une des revendications 1 à 5, **caractérisé en ce que** les éléments pilotes (7, 8) de l'interface de communication sont séparés galvaniquement des interrupteurs (19.1, 19.2, 19.3, 19.4, 19.5) au moyen d'éléments de séparation (9).

7. Appareil de terrain selon une des revendications précédentes, **caractérisé en ce que** l'élément de connexion (2) comporte quatre, cinq ou six contacts (14, 15, 16, 17, 18).

8. Appareil de terrain selon une des revendications précédentes, **caractérisé en ce que** le dispositif de commutation (3) présente au moins un des interrupteurs suivants ou tous les interrupteurs suivants :
- un interrupteur (19,1), qui connecte le contacte (14) au choix avec l'unité fonctionnelle E/S (5) de l'interface d'appareil de terrain ou l'unité fonctionnelle E/S (7) de l'interface de communication,
- un interrupteur (19.2), qui connecte un contact (15) au choix avec une alimentation en tension (4) de l'interface d'appareil de terrain ou l'alimentation en tension (8) de l'interface de communication,
- un interrupteur (19.3), qui connecte le contact (18) au choix avec la masse (22) ou l'unité fonctionnelle E/S (5) de l'interface de communication,
- un interrupteur (19.4), qui connecte le contact (16) au choix avec l'élément fonctionnel E/S (5) de l'interface d'appareil de terrain ou l'élément fonctionnel E/S (7) de l'interface de communication ou
- un interrupteur (19.5), qui connecte le contact (17) au choix avec une alimentation en tension (4) de l'interface d'appareil de terrain ou l'alimentation en tension (8) de l'interface de communication.

9. Appareil de terrain selon une des revendications précédentes, **caractérisé en ce que** l'interface de communication est une interface USB.

10. Appareil de terrain selon une des revendications précédentes, **caractérisé en ce que** le boîtier et les éléments de connexion (2) sont étanches, notamment au moins étanches IP 54 ou IP 67.

11. Appareil de terrain selon une des revendications précédentes, **caractérisé en ce que** les éléments de connexion (2) sont des fiches rondes, notamment des fiches rondes M8 ou M12, avec un filetage extérieur pour le vissage sur le connecteur et avec un socle, dans lequel les contacts (14, 15, 16, 17, 18, 19) sont disposés symétriquement autour d'un centre, dans lequel il est notamment prévu que le contact (18), qui peut éventuellement être relié à la masse (22), se trouve au centre.

12. Appareil de terrain selon une des revendications précédentes, **caractérisé en ce que** les éléments de connexion libres (2) sont fermés de manière étanche à l'eau par des capuchons d'étanchéité.
